# EUROPEAN PATENT APPLICATION

(11) **EP 2 888 947 A1**
(43) Date of publication of application: **01.07.2015**
(21) Application number: 14004248.2
(22) Date of filing: 17.12.2014
(51) Int. Cl.: A23G 1/12, B02C 4/04, B02C 15/12, B02C 25/00

(54) **REFINER / MIXER FOR PRODUCTS FOR THE FOOD INDUSTRY, FOR THE PHARMACEUTICAL INDUSTRY, AND THE LIKE**

(30) Priority: 31.12.2013 IT CN20130014
(71) Applicant: Taricco e Gallo s.n.c., 12060 Novello (CN) (IT)
(72) Inventor: Gallo, Gianni, 12060 Novello (CN) (IT); Taricco, Franco, 12060 Novello (CN) (IT); Giraudo, Vittore, 12100 Cuneo (CN) (IT)

(57) **Abstract**

The present invention is referred to a refiner / mixer(16) of products for the food industry, pharmaceutical industry, and the like, with a precise and continued control of the physical / chemical parameters of refining / mixing, at low energy consumption, with integrated cooling means (19) and washing means (20), with sensorized electronic control, to be directly installed in a production line without stock of the production, to produce in a continuous way a refined / mixed pasty substance, so to obtain a very fresh and controlled product, in which the temperature of the refined / mixed pasty substance is continually controlled during the advancing of the refining / mixing, to not exceed the pre-defined limit values, that, if exceeded, will cause a qualitative decrease of the refined / mixed pasty substance.

It is a refiner / mixer that has in-line granulometric controls (86,87) and in line metal-detector means (90,91), and that consequently does not release metal contaminations, and that permits to chose the feeding position of the products, so to produce innovative products otherwise not producible, engineered to be assembled in a quick and economic way in base of the specific quantity of production required by the customer, and that comprises self-learning and self-adjusting software.

## Description

The present invention is referred to a refiner / mixer of products for the food industry, pharmaceutical industry, and the like, for the production in line in a continued way, at a controlled temperature, at low energy consumption, with integrated cooling means and washing means, with sensorized electronic control, with self-learning of the optimal working parameters, dedicated to the food industry or to sectors with similar requirements, as, for example, the pharmaceutical industry; the invention has been developed with the aim to get a multi-functional machine, expected by the users, able to performs, without mechanical alteration, both the refiner and the mixing function (very important, as we'll see, at a controlled temperature), for pre-refined products. Obviously, the absence of this kind of machine obliges the users to buy two different machines.

**Refiner-** Under the technical point of view, the refiner here described, is capable to compete with the best industrial refiners, offering in certain cases high quality performances and productions that, for the reasons that we'll see, the industrial refiners can't reach; and this with the advantage to be suitable for small productions and frequent production changes, engineered to be easy usable by plants of reduced dimensions.

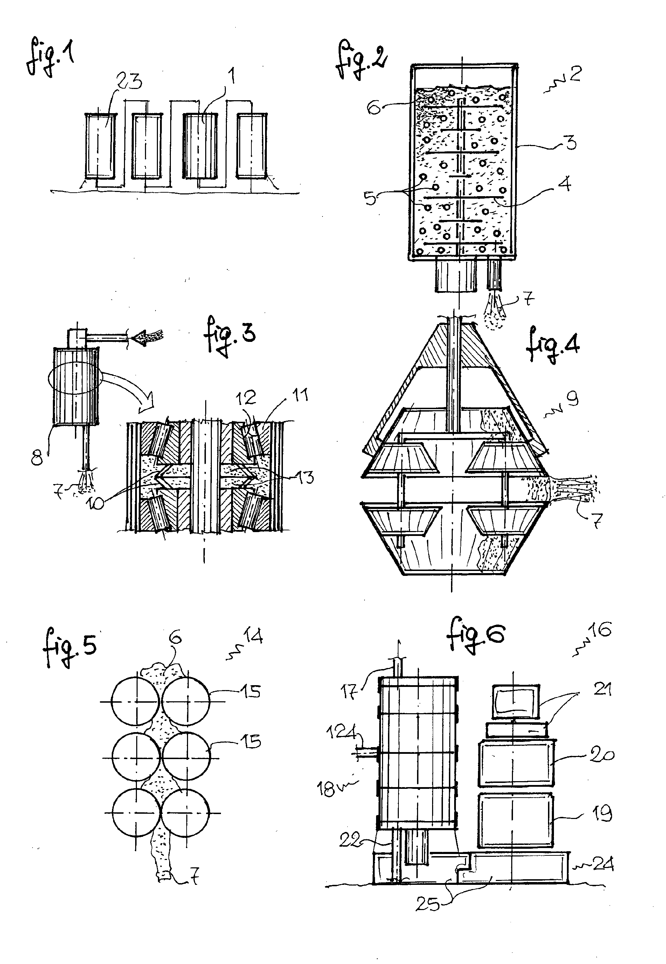

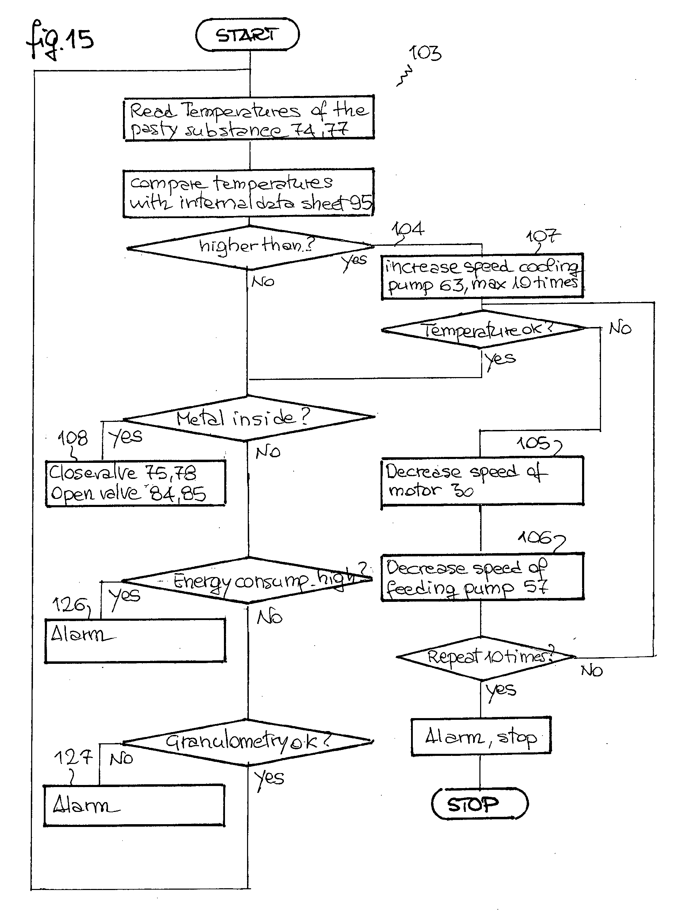

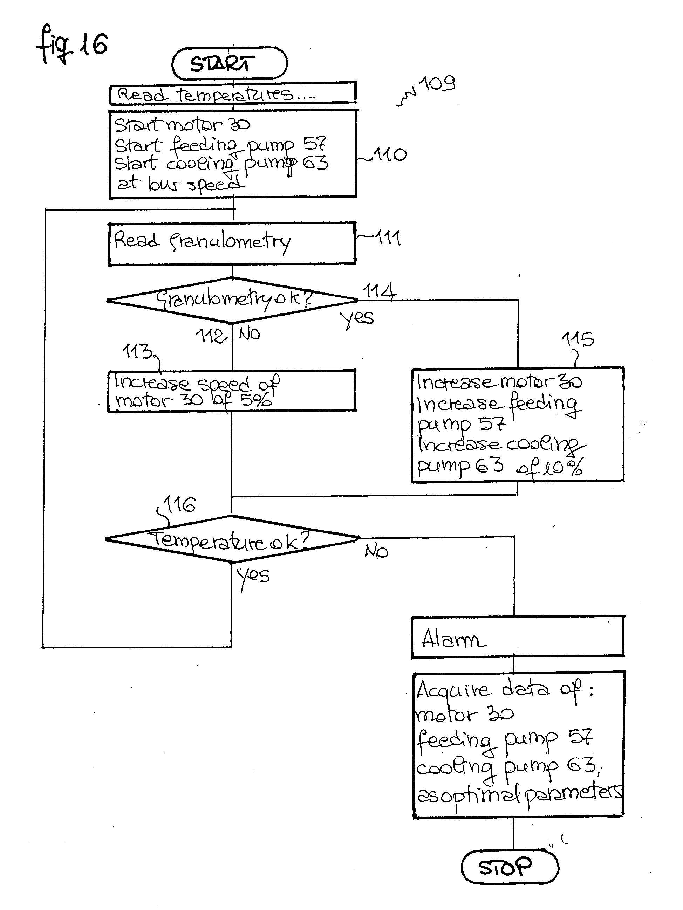

**Mixer-** For what about how the mixing function is performed, as we'll see in detail, it is obtained choosing the established different feeding position of the raw materials, reducing adequately the speed of the refining cinematic means (that in this case only perform the mixing function), and increasing in a calculated way the feeding speed of the raw materials, so to advantage the perfect mixing, avoiding significant influences on the granulometry of the final product.
**1.1- Market destination of refiners-** In particular, with the term refiner 1 (fig. 1) are intended those kinds of machines that performs the breaking of raw materials (a pre-refined of cocoa, pistachios, chestnuts and similar, eventually pre-mixed with milk and/or sugar, etc.), to get a pasty substance 7 (fig. 2), ready to be used in food industries, with a granulometry of about 20 micron, that is considered an ideal value to satisfy organoleptic and taste exigencies. Said raw materials are prepared with a cutting machine 23 (fig. 1) that breaks cocoa, pistachios, chestnuts and similar, till to reach a granulometric dimension of about 400-500 micron, that by experience is considered as an ideal starting values for refining.
**1.2- General characteristics of traditional refiners-** For the functioning, traditional refiners machines require energy, water for the cooling, and liquids and/or alimentary oils, to perform the indispensable and important periodical inner washing cycles, for example, in occasion of changes of production, to avoid taste contaminations. Said traditional refiners were engineered to be installed inside the medium-big industrial plants; for this reason they do not comprise integrated cooling means and washing means, because they are already present in a centralized version inside said medium-big industrial plants, to serve contemporaneously a high number of lines. Consequently, traditional refiners were only arranged to be connected with said centralized cooling and washing means, with obvious managing advantages, but with disadvantages that the present invention intend to overtake; in particular, we observe that to have centralized cooling and washing means, doesn't permit the personalization of the cooling and washing characteristics, so to be aligned with the limits that the different delicate products can afford during the refining. It would be taken in fact in account that the alimentary products are substances very sensible to the variation of the physical / chemical working parameters, as for example, the temperature, the stability, the working time, the exposition time to the normal ambient, the cooling modality, etc.; consequently, is necessary to use additives to get compatibility with the traditional industrial refining transformation. That said, we conclude that, under the quality point of view, the products refined following the traditional methodology, do not reach the levels of excellence that the quality of each single component would merits.
**1.3- Improve the control of the physical / chemical refining parameters-** As the present invention is intentionally dedicated to the market of the small - medium users, that do not have inside theirs centralized cooling and washing means, specific cooling and washing means have been integrated inside the innovative refiner; this solution, that apparently seems to be not acceptable for economical reasons, gives instead a qualitative advantage, because permits, for each refiner and for each kind of product, the precise alignment with the physical / chemical parameters that govern the quality of the refining activity, reducing or avoiding the necessity of additives. Consequently, this fact opens the possibility to create and produce, with an industrial methodology, food products with unique qualities, typical of the handcraft production, and that are impossible to be obtained with traditional industrial refiners.
**1.4- Roller type refiner-** At the current state of the art, another kind of refiner, named roller type refiners 14 (fig. 5) (considered obsolete and rarely used), are known; they comprise rollers 15 (fig. 5) with adjustable center-distance, where the raw material (a pre-refined of cocoa, pistachios, chestnuts and similar) passes through; roller type refiners have high price and high maintenance cost (due to the periodic mechanical re-finishing of the rollers, of big dimensions). Due to the way they were engineered, present the negative aspect to expose the raw material in continue contact with the ambient around, with the effective possibility of contamination from external agents, as insects, powders, etc.; at the same time, always due to the impossibility to isolate the pasty substance from the ambient around, appears that such kind of refiner generates the qualitative poorness of the pasty substance itself, as consequence of the dispersion in atmosphere of aromas and perfumes.
**1.5- Milling spheres refiner-** The most known refiners in the sectors, are the so said milling spheres refiners 2 (fig. 2), engineered in the past to perform other kinds of operation, and then adapted for the food sector, and so un-properly called refiners; they comprises a metal-made container 3 (fig. 2), a rotary mixer 4 (fig. 2), and a certain calculated quantity of steel spheres 5 (fig. 2), similar to the bearing spheres; for what about the functioning, it is the following: the operator fills the container 3 (fig. 2) with the raw materials (with a granulometry of about 400 - 500 micron) of cocoa, pistachios, chestnuts and similar 6 (fig. 2), and starts the rotary mixer, leaving it in functioning for a determined time. During the rotation the spheres are launched at high speed inside the container, so to transform, during the reciprocal collision, the raw material in the pasty substance with the requested granulometry. At the end of the predetermined time, the pasty substance 7 (fig. 2) is downloaded, and the machine is ready to perform the next cycle.
This technology, destined to the big industry and stabilized in the years, seems to have reached a certain degree of obsolescence; and this in consequence of the rapid evolution of the industries, pressed by the attention of customers for the natural aspects of food. Said refiners present the following negative aspects:
**1.5.1-** Intermittent functioning of the machine, that impedes the direct installation in a continued cycle production line; to do this, it is necessary to arrange an intermediate storage of the pasty substance 7 (fig. 2), with negative consequences, as said, on the freshness, homogeneity and workability of the delicate alimentary components.
**1.5.2-** Necessity of refilling of steel spheres 5 (fig. 2), due to the wear in consequence of the reciprocal impact, and of the impact against the internal wall of the container 3 (fig. 2), and necessity of maintenance / periodical change of the container itself, and consequent release of microscopic untraceable metal fragments inside the pasty substance 7 (fig. 2), arriving from the spheres and from the wall of the container, that inevitably pollute the alimentary cycle of the user.
**1.5.3-** Obstacle to the tendency of the sensibility of the market, that is more and more oriented to the valorisation of products without traces of contaminating substances. **1.5.4-** Obstacle to the developing of new products, in low quantity with acceptable costs, in consequence of the technical and economical difficulties that appear for the set-up of the related cooling conditions, and in occasion of the production change; in fact, the spheres technology impose the production of a certain minimum quantity of pasty substance 7 (fig. 2), able to fill completely the container 3 (fig. 2).
**1.5.5-** Difficulties in the cleaning operation, because the production change requires the washing of the steel spheres (activity that is particularly complicated and delicate), to avoid flavours and perfumes contaminations.
**1.5.6-** Production of uncontrollable heat during the refining phase (that degrades the quality of the refined pasty substance), in consequence of the impact at high speed among the spheres, and against the container.
**1.5.7-** Due to the dimensions of the container, the heat is not uniform inside the mass in refining, and this impedes a precise control of the thermal regime of refining. Important consequence: this problem influences the stability of the organoleptic characteristics of the refined pasty substance, as already said, so to impose the limitation of the variety of products for the market.
**1.6- Theoretical solutions-** With the intention to reduce some of said negative aspects, solutions based on a rolling system were imagined; they did not reached the market, because they were not complete under the technical point of view, and so non realizable because of some non trivial problems created by themselves; for example, is known the (not granted) patent application TO2009A000571 - Masante, 8 (fig. 3). In it, the refining is performed by means of compression of the raw material of cocoa, pistachios, chestnuts and similar, pressed among rotating means against a surface; this system offers non secondary advantages, that consist in:
- avoiding steel fragment contamination of the pasty substance, as already said, in consequence of the wear of the spheres during the high speed reciprocal impact.
- reduction of the energetic consumptions with respect to the state of the art.
   In the related search report, document DE1228896B - Baltzer, 9 (fig. 4) is also described; this document is about a painting mixer that, despite the appearance, could not be applied to the refining activity; this because, as will be clear later, it do not observes some fundamental points of the alimentary sector.
**1.7- Defects of the existing patent application-** In the case of the technology showed in the patent application TO2009A000571 - Masante, there is an anomaly that invalidates the claimed principle: In fact, rolling parts 11 (fig. 3) are pre-charged by means of cup springs 10 (fig. 3); said pre-charge has the aim to guarantee the automatic adjustment and the adequate compression of the raw material among the rolling parts 11 (fig. 3) and the surfaces 12 (fig. 3), to produce the pasty substance with a granulometry of 20 micron. As in the drawing of the document TO2009A000571 - Masante, and as confirmed with practical tests, during the flowing inside the refiner, raw material and pasty mass fill the space 13 (fig. 3) among the cup springs 10 (fig. 3), becoming hard in few time, and impeding consequently the correct compression of the raw material; therefore, the produced pasty substance is not conform to the specification, because has a non acceptable granulometry fluctuation, out of the required degree (20 micron). Is noticed in fact that the raw material is an organic alimentary substance, subjected to rapid drying and alteration; the static accumulation in hidden places, in relatively short time generates its hardening and its decomposition in carbonized substances. Hardening substances that would be able to contaminate the pasty substance under the organoleptic, aesthetic and hygienic point of view. Moreover, due to the conformation of the machine, it is impossible to remove said hardened substance out of the spaces among the cup springs 10 (fig. 3) by means of the internal washing means; to solve this problem, the only (but non acceptable solution) consists in the daily complete disassembling of the machine.
**1.8- Feeding position of the raw materials-** An other problem about traditional refiners, is in the fact that the raw material must be filled from the top; this condition simplify the composition of the industrial plants, but is unacceptable in these days, because the evolution and the use of new raw materials, demonstrate that the correct filling position is function of the final product characteristics, and / or function of said new raw materials. For example, premixed raw materials that contain sugar and / or milk, must be filled into the refiner machine under pressure from its lower part, to create a flow motion in a contrary direction, in opposition to the gravity force; this because gravity force facilitates the descending of same heavy components, reducing the uniformity of the pasty substance, and impeding the stabilizing of the correct granulometry. Under the practical point of view, if the correct refining granulometry is not reached, the refining must be repeated; and this means the applying of a second thermal and mechanical shocks, that degrade the quality of the pasty substance, as happens for each food re-heated more times.
**1.9- Sizes and dimensions of the traditional refiners-** For what about the engineering aspects, traditional refiners are produced in different sizes, in base of the required production per hour, with different dimensions of the container where the refiner is executed; as we'll see, is noticed that the present patent application, claims the option to arrange the innovative refiner in different sizes. This option is performed assembling together in series, one or more devices (1, 2, 3, 4, 5) previously pre-assembled and stored, till to get the required production per hour. Whit reference to the production per hour, we underline that the present invention has been engineered to satisfy first of all the small - medium industry, trying to offer low step production ranges, from 50, 100, 150, 200, 250 kg per hour, with acceptable costs. Anyway, productions higher than 250 kg per hour, typical of big industries, are obtainable with the parallel installation of more refiners / mixers with output of 250 kg per hour; or, as we'll see, in case of requested high output, applying the same principle with a bigger proportion.
**1.10- Mixers-** We observe that the traditional mixers are different kind of machines respect to the refiners one, and, as intuitable and as already said, at the state of the art only execute the simple mixing of pre-refined product; and this because they are simple agitators in which (under the thermal point of view), the mixing process is performed in a rough and non-controlled way. Briefly, undesired overheating of the final pasty substance is provoked, with the negative consequences already described for the traditional refiners. Moreover, for technological reasons, both the roller refiners than the milling spheres refiners are not able to perform the mixing task; in fact, the shifting from the refiner function to the mixing one, involves important and non acceptable mechanical alterations.
**1.11- Other existing patents-** To complete the analysis of the state of the art, the patent application DE19931181A1 is cited, Intelligent software for process chocolate manufacture for fine control and reduction of quality rejections - Buehler AG (CH); as in the title, DE19931181A1 protects a software that promises to get a reduction of quality rejections. Despite this, there is no trace in it of flowcharts and / or of the related technical means that specify how said software could practically operate to reach the goal specified.
Moreover the description, the claims and the drawings, (2 figures and 9 components), do not fit with the patent rules, because do not permit the construction of the device; they in fact represent a simple intention, without the indispensable information for the practical application. We underline instead that in the description, in the claims and in the drawings of the present patent application, there are 19 figures in which are described about 130 components (sensors, motors, valves, etc.) in which the related electronic control is specified in the related flowcharts, that describes the self-learning software (fig. 16 and claim 9), and for the automatic functioning (fig. 15 and claim 10).
In conclusion, moreover, we underline that the mechanical structure and the related electronic means here described, claimed and illustrated in the present patent application, has been specifically engineered in function of the innovative sensorized automatic functioning of the entire new refiner / mixer machine; also for these reasons, in our opinion, we consider that the documents TO2009A000571 e DE19931181A1 do not anticipate the present patent application.
**1.12- Resume-** That said, we are convinced that the market would get advantages by the use of updated refiner / mixer machines; refiner / mixer machines completely autonomous, plug and play, with electronic control, with evolutive sensorized devices, to permit the precise control of the physical / chemical parameters, with low energy consumption, ready for the in-line production, with integrated cooling and washing means, that do not release contamination, that permit the choosing of the uploading position of the raw materials, engineered to be assembled in a rapid ad economic way according to the required production per hour, and easy to be enlarged or reduced in the future.
That said, we describe here below the innovative refiner / mixer, and the list of the related drawings.

| **Fig. n.** | **2- Drawings** |
|---|---|
| **1** | Traditional refiner |
| **2** | milling spheres refiner |
| **3,4** | Rolling system: theoretical solutions |
| **5** | Rolling system refiner |
| **6** | New refiner / mixer |
| **7** | Structure of the new refiner / mixer |
| **8** | Cinematic means for refining / mixing and cooling holes, section I-I in fig. 9 |
| **9** | Cinematic means for refining / mixing and cooling holes, view from III in fig. 8 |
| **10** | Connexions among the cinematic means for refining / mixing, detail II in fig. 7 |
| **11** | Cinematic means for refining / mixing, detail anti-contamination, detail IV in fig. 8 |
| **12** | New refiner / mixer, scheme and sensors |
| **13** | Scheme of the components |
| **14** | Scheme of the Command and control central unit |
| **15** | Flowchart of the electronic software for the refiner / mixer |
| **16** | Flowchart of the electronic software for the self-learning of the functioning parameters for the refiner / mixer |
| **17** | Composition of the refiner / mixer with output of 50, 100, 150, 200, 250 kg per hour |
| **18** | Composition of the refiner / mixer with output of 500 kg per hour |
| **19** | Composition of the refiner / mixer with output of 1000 kg per hour |

### 3- DESCRIPTION OF THE INVENTION

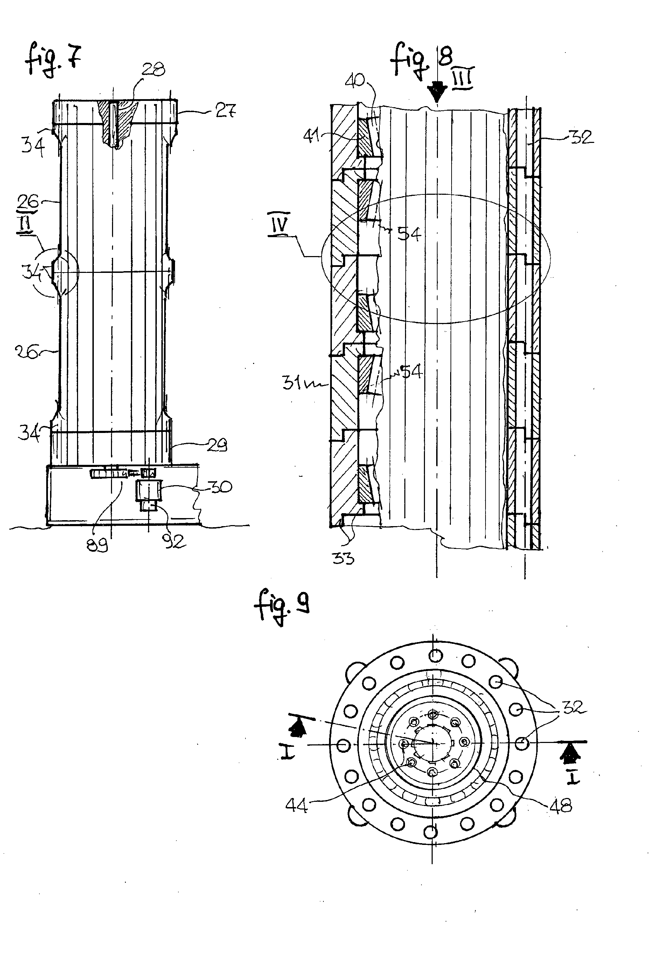

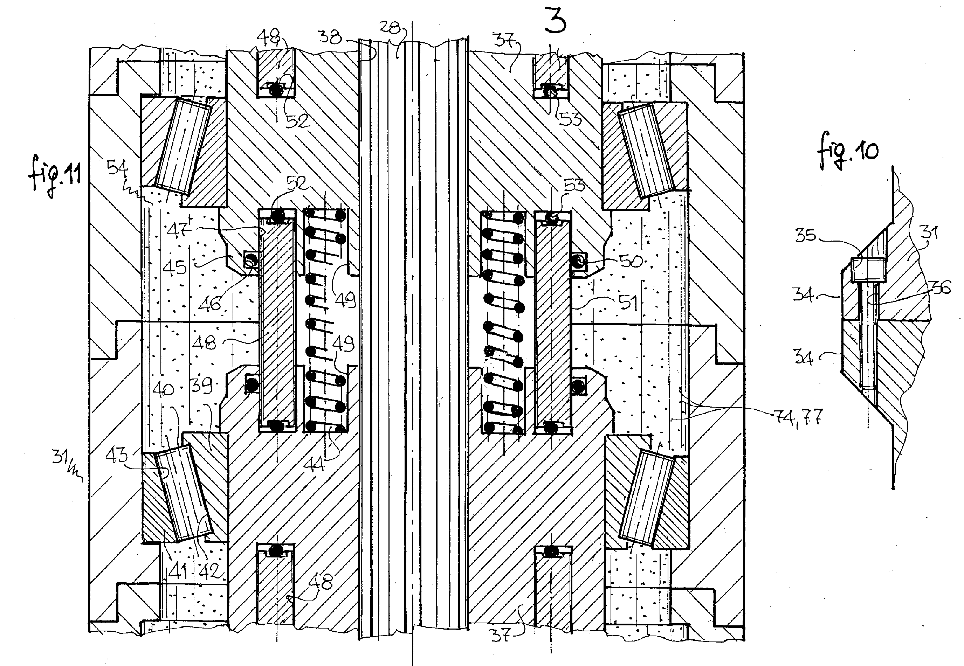

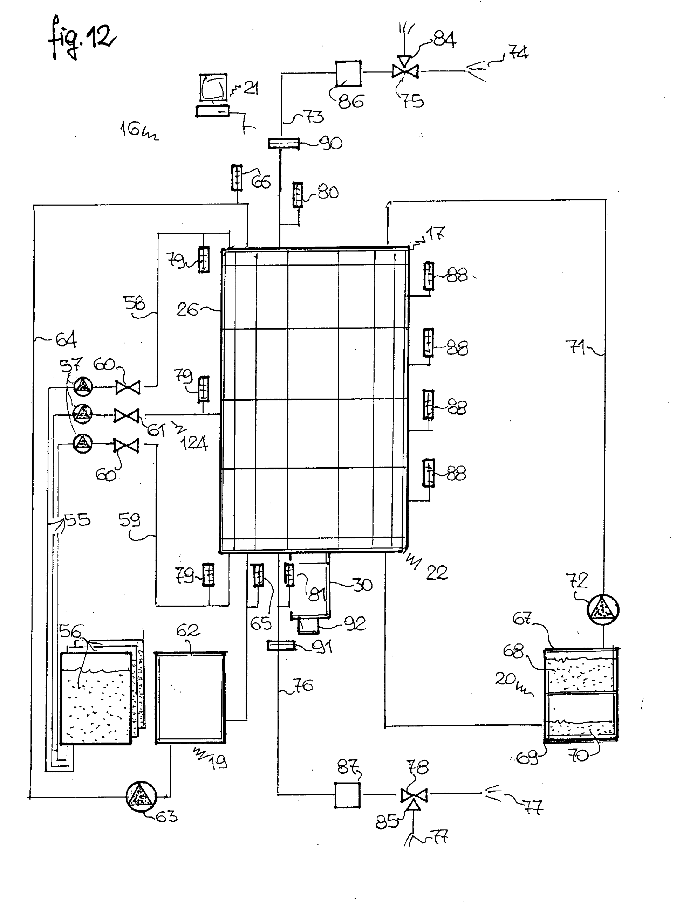

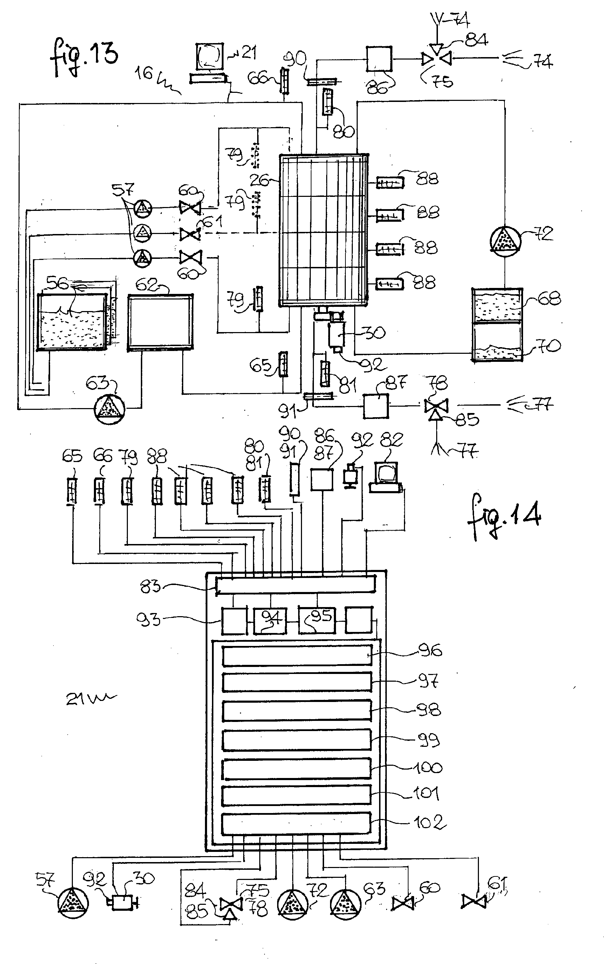

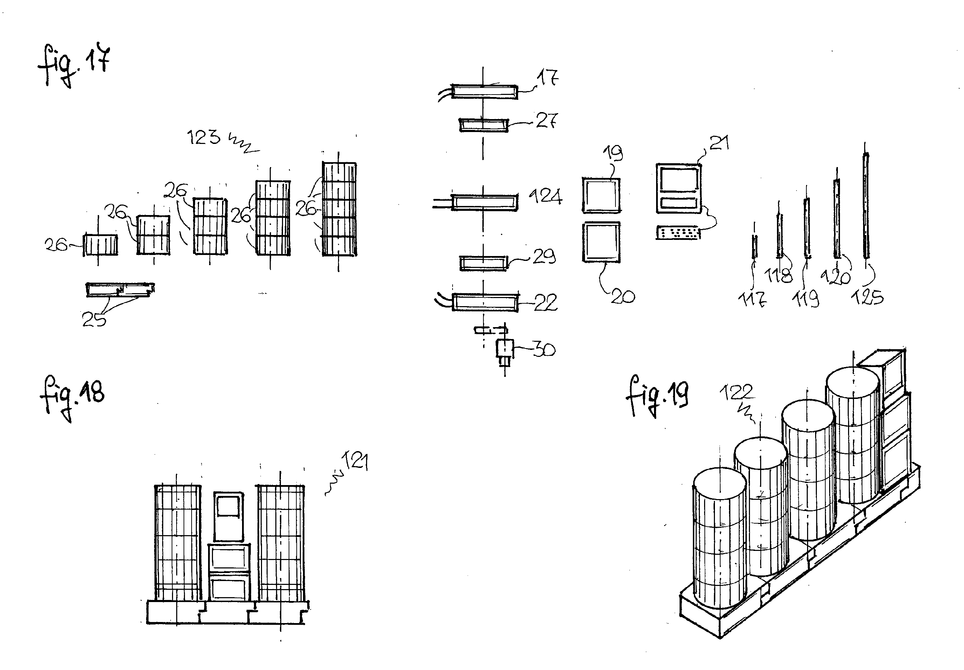

**3.1- Components-** The refiner / mixer 16 (fig. 6) comprises:
   A structure 24 (fig. 6),
      means for the refining / mixing 18 (fig. 6),
      feeding means from the top 17 (fig. 6), from the bottom 22 (fig. 6), and/or from intermediate position 124 (fig. 6) of raw materials (pre-refined of cocoa, pistachios, chestnuts and similar, milk, sugar, etc.),
      cooling means 19 (fig. 6),
      washing means 20 (fig. 6),
      a central unit 21 (fig. 6) with electric and electronic means, under the control of the operator, to command and control the refiner / mixer.
**3.2- Structure-** The structure 24 (fig. 6) contains all the components, that are connected with it; it comprises one or more benches 25 (fig. 6), arranged for the quick connexion among more benches, in base to the requested production per hour of the refiner / mixer.
**3.3- Means for refining / mixing-** The means for the refining / mixing 18 (fig. 7) comprise:
   - a motor group 30 (fig. 7) brushless type, electrical maintenance free, at high efficiency, used in the industrial automation, at electronic control, with feedback 92 (fig. 7) for the speed control, a transmission belt 89 (fig. 7), and a transmission spline shaft 28 (fig. 7),
   - an upper head 27 (fig. 7) that supports the upper part of the transmission spline shaft 28 (fig. 7), where are connected the feeding means from the top 17 (fig. 6), the cooling means 19 (fig. 6), and the washing means 20 (fig. 6), and that comprises a piping 73 (fig. 12) for the output of the refined pasty substance 74 (fig. 12) (and that can be directly installed in-line in the production line), when the raw material 56 (fig. 12) is fed from the bottom; on this piping 73 (fig. 12), is placed a metaldetector 90 (fig. 12), and an electronic valve 84 (fig. 12), to permit the extraction of samples of refined pasty substance 74 (fig. 12) during the refining / mixing itself, and / or permits the automatic expulsion of the refined pasty substance, 74 (fig. 12), if metal fragments are detected by the metaldetector 90 (fig. 12). Moreover, the piping 73 (fig. 12) comprises a valve 75 (fig. 12), that close the piping 73 (fig. 12) itself when the raw material 56 (fig. 12) is fed from the top, and a temperature sensor 80 (fig. 12) to control the temperature of the refined pasty substance 74 (fig. 12) at the end of the refining / mixing.
   - a lower head 29 (fig. 7) that supports the upper part of the transmission spline shaft 28 (fig. 7), and the motor group 30 (fig. 7); at this lower head 29 (fig. 7) are also connected the feeding means from the bottom 22 (fig. 6), the cooling means 19 (fig. 6), and the washing means 20 (fig. 6). Said lower head comprises a piping 76 (fig. 12) for the output of the refined pasty substance 77 (fig. 12) (and that can be directly installed in-line in the production line), when the raw material 56 (fig. 12) is fed from the top; on this piping 76 (fig. 12), is placed a metaldetector 91 (fig. 12), and an electronic valve 85 (fig. 12), to permit the extraction of samples of refined pasty substance 77 (fig. 12) during the refining / mixing itself, and / or to permit the automatic expulsion of the refined pasty substance, 77 (fig. 12), if metal fragments are detected by the metaldetector 90 (fig. 12). Moreover, the piping 76 (fig. 12) comprises a valve 78 (fig. 12), that closes the piping 76 (fig. 12) itself when the raw material 56 (fig. 12) is fed from the bottom, and a temperature sensor 81 (fig. 12) to control the temperature of the refined pasty substance 77 (fig. 12) at the end of the refining / mixing.
   - one or more refining / mixing devices 26 (fig. 7), that represent the hearth of the machine, and that comprises:
   - a hollow cylinder 31 (fig. 8) ) that comprises cooling holes 32 (fig. 8, 9), and that presents portions 33 (fig. 8) of small diameter, to receive in a precise way the cinematic means for refining / mixing 54 (fig. 8), hollow cylinders 31 (fig. 8) that present portions 34 (fig. 7, 10) with holes 36 (fig. 10) that permit the reciprocal connection among a certain quantity of said refining / mixing devices 26 (fig. 7), and with the upper head 27 and the lower head 29 (fig. 7), by means of screws 35 (fig. 10). Each hollow cylinder 31 (fig. 8) comprises a temperature sensors 88 (fig. 12) for the continue control in real time of the temperature of the pasty substance during the refining / mixing process.
**3.4- The cinematic means for refining / mixing, and how they work-** Said cinematic means for refining / mixing 54 (fig. 11) comprise a flange 37 (fig. 11) with a splined hole 38 (fig. 11), an inner ring 39 (fig. 11) blocked on said flange 37 (fig. 11), an outer ring 41 (fig. 11) blocked inside the hollow cylinder 31 (fig. 11), with rolling parts 40 (fig. 11) placed between the surfaces 42 e 43 (fig. 11). The splined hole 38 (fig. 11), receives the transmission spline shaft 28 (fig. 11), that, during the rotation, gives contemporarily motion to the cinematic means for refining / mixing 54 (fig. 11) themselves, performing in this way the refining / mixing of the raw material. In the case here described, for simplification, inner and outer rings, and the rolling parts, could be considered the equivalent of a oblique rollers bearing; the shape, the dimension and the materials would be projected in a dedicated way, in base to the refining / mixing exigencies.
**3.5- Pre-charge of the cinematic means for refining / mixing -** As in the drawings, each couple of bearings is installed with the related angles in opposite position, and among them are placed pre-charge means, that are helicoidal compression springs 44 (fig. 11); they are positioned in a radial way, and have the function to guaranty a calculated and gradual refining / mixing force, so to permit the continuous indispensable and little adjustments of the rolling parts 40 (fig. 11) during the refining / mixing.
**3.6- To solve the problems in the point 1.7 -** The innovative solution here claimed, has been engineered with the aim to solve the problems listed at the point 1.7 *(raw material and pasty mass fill the space 13 (**fig. 3**) among the cup springs 10 (**fig. 3**), becoming hard in few time, and impeding consequently the correct compression of the raw material).* This result has been achieved working in two directions, that consist in changing the cup springs 10 (fig. 3) with a series of helicoidal springs 44 (fig. 11); their self-cleaning shape, contrarily to the cup springs, impede the accumulation of pasty substance among them, and permit the contemporaneous creation of a double labyrinth sealed with double OR seals, to avoid contaminations and malfunctioning as described in the point 1.7.
**3.7- Advantages of the innovative solution-** Respect to document TO2009A000571, said innovative aspect presents the following advantages:
   - To guaranty a major mechanical stability, that the cup springs do not offer, due to theirs big dimensions, to their short stroke, and to the scarce sensibility to the continuous micromovements; in fact, in the present application, the fluctuation of the refining / mixing peek load, brings the cup springs in few time to lost the elastic properties, impeding the correct refining / mixing of the pasty substance.
   - To permit a working flexibility, because, with the simple changing of the number of helicoidal springs, it is possible to adjust the pre-load on the rolling parts 40 (fig. 11); and this in function of the number of refining / mixing devices that composes the refiner / mixer, and / or in base to the kind of products to be refined.
**3.8- Sealed labyrinth -** As said, contrarily to the document TO2009A000571, in the present invention the springs 44 (fig. 11) and the transmission spline shaft 28 (fig. 11) are protected from contamination by alimentary products by means of a labyrinth effect; in detail, this cited labyrinth effect is obtained with the insertion of sealing means 48 (fig. 11) in shape of ring, between each flange 37 (fig. 11); ring 48 (fig. 11) that comprises, at the tips, a groove 52 (fig. 11) for the seal OR 53 (fig. 11). The length of said ring 48 (fig. 11), is calculated so to compress the seals OR 53 (fig. 11) in the calculated way against the related grooves 52 (fig. 11), so to avoid infiltrations, and to permit contemporarily the slight and indispensable adjustment of the rolling parts 40 (fig. 11), during the refining / mixing.
   The flange 37 (fig. 11) comprises:
   - a cylindrical portion 45 (fig. 11), that protrudes and that internally comprises a groove 46 (fig. 11) to receive a seal OR 50 (fig. 11),
   - a groove 47 (fig. 11) to receive with precise backlash the ring 48 (fig. 11), in which the related surface 51 (fig. 11) is coupled in a sealed way by means of said seal OR 50 (fig. 11), so to guaranty a second sealed surface against the infiltration.
   - a series of grooves 49 (fig. 11) to receive a series of springs 44 (fig. 11), that, according with the required pre-load, could be from 2 to 8.
**3.9- Feeding means from the top, from the bottom, and from intermediate positions -** The feeding means of raw materials (pre-refined, milk, sugar, etc.) from the top 17 (fig. 6), from the bottom 22 (fig. 6), comprise the piping 55 (fig. 12) for feeding the raw material 56 (fig. 12), an electronically controlled feeding pump 57 (fig. 12), that derives two piping 58, 59 (fig. 12), that are connected with the related upper and lower heads 27, 29 (fig. 7). On each piping 58, 59 (fig. 12), are installed the electronically controlled valves 60, 61 (fig. 12), that permit to chose the feeding position for the raw material more suitable for the kind of product to be refined / mixed, and the temperature sensors 79 (fig. 12) to check the raw materials in entrance 56 (fig. 12). According with the kind of product, is also forecasted the possibility to feed the raw materials from an intermediate position, by means of the feeding means 124 (fig. 6, 12), to permit the refining / mixing of innovative products, in which is necessary to use said feeding position of the raw materials.
**3.10- Cooling means -** The cooling means 19 (fig. 12) comprise a heat exchanger 62 (fig. 12), an electronically controlled cooling pump 63 (fig. 12), the connecting piping 64 (fig. 12) to the refiner / mixer, a temperature sensor 66 (fig. 12) for the water in entrance, and a temperature sensor 65 (fig. 12) for the water in discharge.
**3.11- Washing means-** The washing means 20 (fig. 12) comprise a container 67 (fig. 12) for the clean washing liquid 68 (fig. 12), a container 69 (fig. 12) for the recovery of the contaminated washing liquid 70 (fig. 12), the connecting piping 71 (fig. 12) to the refiner / mixer, an electronically controlled feeding pump 72 (fig. 12).
**3.12- Different production per hour-** In fig. 17 all the basic components 123 (fig. 17) of said refiner / mixer, necessary to cover the principal exigencies of the market, are shown. As already said at point 1.9, the majority of said exigencies, is covered by means of 5 configurations of production per hour, that are obtained with the assembling of the following standard components ready in the store / workshop:
   - **till to 50 kg/hour:** a bench 25 (fig. 17), an upper head 27 (fig. 17), a lower head 29 (fig. 17), a motor group 30 (fig. 17), a transmission belt 89 (fig. 17), a transmission spline shaft 117 (fig. 17), a refining / mixing device 26 (fig. 17), a feeding means from the top 17 (fig. 17) and from the bottom 22 (fig. 17) and/or from intermediate position 124 (fig. 17) of the raw materials (pre-refined, milk, sugars, etc.), a cooling means 19 (fig. 17), a washing means 20 (fig. 17), the central unit 21 (fig. 17) with the electric and electronic means.
   - **till to 100 kg/hour:** a bench 25 (fig. 17), an upper head 27 (fig. 17), a lower head 29 (fig. 17), a motor group 30 (fig. 17), a transmission belt 89 (fig. 17), a transmission spline shaft 118 (fig. 17), two refining / mixing devices 26 (fig. 17), a feeding means from the top 17 (fig. 17) and from the bottom 22 (fig. 17) and/or from intermediate position 124 (fig. 17) of the raw materials (pre-refined, milk, sugars, etc.), a cooling means 19 (fig. 17), a washing means 20 (fig. 17), the central unit 21 (fig. 17) with the electric and electronic means.
   - **till to 150 kg/hour:** a bench 25 (fig. 17), an upper head 27 (fig. 17), a lower head 29 (fig. 17), a motor group 30 (fig. 17), a transmission belt 89 (fig. 17), a transmission spline shaft 119 (fig. 17), three refining / mixing devices 26 (fig. 17), a feeding means from the top 17 (fig. 17) and from the bottom 22 (fig. 17) and/or from intermediate position 124 (fig. 17) of the raw materials (pre-refined, milk, sugars, etc.), a cooling means 19 (fig. 17), a washing means 20 (fig. 17), the central unit 21 (fig. 17) with the electric and electronic means.
   - **till to 200 kg/hour:** a bench 25 (fig. 17), an upper head 27 (fig. 17), a lower head 29 (fig. 17), a motor group 30 (fig. 17), a transmission belt 89 (fig. 17), a transmission spline shaft 120 (fig. 17), four refining / mixing devices 26 (fig. 17), a feeding means from the top 17 (fig. 17) and from the bottom 22 (fig. 17) and/or from intermediate position 124 (fig. 17) of the raw materials (pre-refined, milk, sugars, etc.), a cooling means 19 (fig. 17), a washing means 20 (fig. 17), the central unit 21 (fig. 17) with the electric and electronic means.
   - **till to 250 kg/hour:** a bench 25 (fig. 17), an upper head 27 (fig. 17), a lower head 29 (fig. 17), a motor group 30 (fig. 17), a transmission belt 89 (fig. 17), a transmission spline shaft 125 (fig. 17), five refining / mixing devices 26 (fig. 17), a feeding means from the top 17 (fig. 17) and from the bottom 22 (fig. 17) and/or from intermediate position 124 (fig. 17) of the raw materials (pre-refined, milk, sugars, etc.), a cooling means 19 (fig. 17), a washing means 20 (fig. 17), the central unit 21 (fig. 17) with the electric and electronic means.
   - **Other configurations:** Refiners / mixers with a production per hour higher than 250 kg/hour, for example, till to 500 kg/hour, 121 (fig. 18), comprise:
   - **till to 500 kg/hour:** two benches 25 (fig. 17), two upper heads 27 (fig. 17), two lower heads 29 (fig. 17), two motor groups 30 (fig. 17), two transmission belts 89 (fig. 17), two transmission spline shafts 125 (fig. 17), ten refining / mixing devices 26 (fig. 17), two feeding means from the top 17 (fig. 17) and two from the bottom 22 (fig. 17) and/or two from intermediate position 124 (fig. 17) of the raw materials (pre-refined, milk, sugars, etc.), two cooling means 19 (fig. 17), two washing means 20 (fig. 17), the central unit 21 (fig. 17) with the electric and electronic means.
   - **High production per hour, typical for the big industries-** Refiners / mixers with a production per hour typical for the big industries, for example with an output of 1000 kg/hour 122 (fig. 19), are obtained with a battery of 4 refiners in series with an output of 250 kg/hour, and so on.
**3.13- Other innovative characteristics-** In addition to the mechanical ones described above, others innovative characteristics resumed here below, are disclosed in the present invention; they are consequence of the presence of the sensorized electronic control, that will be described later; said others innovative characteristics are the following:
   - to make a production in line in a continue way of a refined pasty substance, suitable for the direct installation in a continued cycle production line, without intermediate storage of the refined pasty substance, so to guaranty its freshness.
   - to impede the overheating of the refined pasty substance during all the working phases; overheating that would provoke a qualitative degrade of said refined pasty substance.
   - to guaranty an energy saving of about the 50 %, in consequence of the optimization of the rolling cinematic refining / mixing means.
**3.14- The central unit 21 (****fig. 6****) with electric and electronic means-** To the central unit 21 (fig. 14) are connected the following electric and electronic means: the sensors temperature 65, 66, 79, 88, 80, 81 (fig. 13, 14), the metaldetectors 90, 91 (fig. 13, 14), the granulometric sensors 86, 87 (fig. 13, 14), the electronically controlled feeding pump 57 (fig. 13, 14), the electronically controlled feeding valves for the raw materials 60, 61 (fig. 13, 14), the motor 30 (fig. 13, 14) and the related electronic control and feedback 92 (fig. 13, 14), the electronically controlled valves 84, 85 (fig. 13, 14), the electronically controlled valves 75, 78 (fig. 13, 14), electronically controlled cooling pump 63 (fig. 13, 14), the electronically controlled washing pump 72 (fig. 13, 14), the means for data elaboration and visualization 82 (fig. 14).
**3.15- Block diagram of the central unit-** The central unit 21 (fig. 14) for command and control comprises:
   - Devices for the acquisition of data 83 (fig. 14)
   - Means for the treatment and the memorizing of data 93 (fig. 14)
   - Software for the treatment of the data 94 (fig. 14)
   - Internal data-sheets 95 (fig. 14)
   - Electronic controller 96 (fig. 14) for the motor/s 30 (fig. 14)
   - Electronic controller 97 (fig. 14) for the feeding pump/s 57 (fig. 14)
   - Electronic controller 98 (fig. 14) for the valve/s 84, 85 (fig. 14)
   - Electronic controller 99 (fig. 14) for the valve/s 75, 78 (fig. 14)
   - Electronic controller 100 (fig. 14) for the cooling pump/s 63 (fig. 14)
   - Electronic controller 101 (fig. 14) for the washing pump/s 72 (fig. 14)
   - Electronic controller 102 (fig. 14) for the valve/s 60, 61 (fig. 14)
**3.16- Working principle of the central unit-** The central unit 21 (fig. 14), that governs the entire refiner / mixer 16 (fig. 14), acquires and/or memorizes the values acquired by the sensors and/or inserted by the operator, etc., elaborates them with the means 94 (fig. 14), compares them in an iterative way with the internal data-sheets 95 (fig. 14), etc., and sends data to the related electronic controllers 96, 97, 98, 99, 100, 101, 102 (fig. 14) of each component, according to the internal data-sheets 95 (fig. 14), so to guaranty:
   - That the temperature of the pasty substance, around each point of measurement, do not overtakes a certain critical value
   - The absence of metal fragments in the pasty substance
   - The correctness of the granulometry
**3.17- Flowchart of the self-learning software for the optimal working parameters-** The flowchart 109 (fig. 16) has been projected to facilitate the search of the optimal working parameters of a new product to be refined /mixed, to guaranty the reaching of the correct granulometry (for example, 20 micron) in the shortest time, and in conformity with the limits of temperature that, if overtaken, provoke the degrade of the refined pasty substance; the working principle is the following:
   the temperature of the raw materials 56 (fig. 12) is acquired by means of the sensors 79 (fig. 12) before the refining / mixing,
   the temperature of the pasty substance 74, 77 (fig. 12) during the refining / mixing, is acquired by means of the sensors 88 (fig. 12) at each refining / mixing stage,
   the temperature of the pasty substance 74, 77 (fig. 12) at the end of the refining / mixing, is acquired by means of the sensors 80, 81 (fig. 12).
   said temperatures are compared with the related alarms in the internal data-sheets 95 (fig. 14).
      In case of a new product, without historical data, the operator chose the self-learning software 109 (fig. 16), that executes the operation 110 (fig. 16), that starts the feeding pumps 57 (fig. 14), the motor 30 (fig. 14), the cooling pump 63 (fig. 14), at the 30 % of the maximum speed.
      The granulometry 111 (fig. 16) is measured by means of the instrument 90, 91 (fig. 14); if the granulometry is superior 112 (fig. 16) to the value specified in the internal data-sheet 95 (fig. 14), for example 20 micron, the central unit 21 (fig. 14) executes the operation 113 (fig. 16) that consists in the increasing of the 5 % the speed of the motor 30 (fig. 14), so to refine the same quantity of raw material in a more efficient way.
      Then the measuring of the granulometry 111 (fig. 16) is repeated, and, if the granulometry is yet superior 112 (fig. 16) to the value specified in the internal data-sheet 95 (fig. 14), the central unit 21 (fig. 14) executes the operation 113 (fig. 16), that consists in the increasing only the speed of the motor 30 (fig. 14) of the del 5 %; this operation is repeated, till to reach the requested granulometry.
      At this point the first goal is reached, because the correct set-up parameters for the feeding pump 57 (fig. 14), the motor 30 (fig. 14), the cooling pump 63 (fig. 14) (that guaranty the correctness of the granulometry 114 (fig. 16)), are achieved.
      At this point, as said, the feeding pump 57 (fig. 14), the motor 30 (fig. 14), the cooling pump 63 (fig. 14), are working around the 30 % of theirs maximum performances, and there is consequently room to execute the operation 115 (fig. 16), that consists in the increasing in an iterative, proportional and mathematically correlated way, said three speeds. For example, of the 10 %; then the operation 116 (fig. 16) of control of the temperature of the pasty substance is activated. If said temperature is yet under the upper limit, the measurement of the granulometry 111 (fig. 16) is repeated, and other cycles of increasing of the 10 % of the feeding pump 57 (fig. 14), of the motor 30 (fig. 14), and of the cooling pump 63 (fig. 14) speeds, are executed. Contemporarily, at each cycle, the operations of control of the temperature 116 (fig. 16) and of the granulometry 111 (fig. 16) of the pasty substance are performed; and this till to the reaching of the upper temperature limit.
      In this way, the correctness of the temperature and of the granulometry of the pasty substance are contemporarily guaranteed, because they are controlled at each cycle; at this point, the speeds of the feeding pump 57 (fig. 14), of the motor 30 (fig. 14), and of the cooling pump 63 (fig. 14), can be considered as the best parameters for the production of that specific product.
**3.18- Flowchart for standard refining / mixing software-** The flowchart 103 (fig. 15) has been projected for the normal condition of refining / mixing of a product of whom are already known the optimized refining / mixing parameters; the working principle is the following:
   the temperature of the raw materials 56 (fig. 12) is acquired by means of the sensors 79 (fig. 12) before the refining / mixing,
   the temperature of the pasty substance 74, 77 (fig. 12) during the refining / mixing, is acquired by means of the sensors 88 (fig. 12) at each refining / mixing stage,
   the temperature of the pasty substance 74, 77 (fig. 12) at the end of the refining / mixing, is acquired by means of the sensors 80, 81 (fig. 12).
   said temperatures are compared with the related alarms in the internal data-sheets 95 (fig. 14).
      if said temperatures are higher 104 (fig. 15), then the central unit 21 (fig. 14) performs the operation 107 (fig. 15), that consists in the gradual increasing of the speed of the cooling pump 63 (fig. 14).
      This operation is performed in a cycling way, for example 10 times, to understand if the decreasing of the temperature will be able to reach the limits of the internal data-sheet 95 (fig. 14) within a certain defined period of time, for example, 2 minutes.
      If this goal is not reached,
      the central unit 21 (fig. 14) performs the operations 105 (fig. 15), that consists in the lowering of the speed of the motor 30 (fig. 14), and 106 (fig. 15), that consists in the lowering of the speed of the feeding pump 57 (fig. 14) of the raw material, till to get accordance respect to the internal data-sheets 95 (fig. 14).
      This operation is performed in a cycling way, for example 10 times, to understand if the decreasing of the temperature will be able to reach the limits of the internal data-sheet 95 (fig. 14) within a certain defined period of time, for example, 2 minutes.
      If this goal is not reached,
      the central unit 21 (fig. 14) performs the stop of the refiner / mixer. If this goal is reached,
      the central unit 21 (fig. 14) continues the refining / mixing.
**3.19- Flowchart of the software for the control of metal fragments -** This control has the aim to verify in real time the presence of metal fragments inside the pasty substance at the end of the refining / mixing 74, 77 (fig. 12), for example, in consequence of damages of the refining / mixing cinematic means 54 (fig. 11); in case of presence of metals, signalled by means of the metaldetector 90, 91 (fig. 12), the operation 108 (fig. 15) is activated. The central unit 21 (fig. 14) performs the stop of the refiner / mixer, with a controlled closing of the valve 75, 78 (fig. 12) to impede the sending of the contaminated pasty substance 74, 77 (fig. 12) to the line of production, and the opening of the valve 84, 85 (fig. 12), to get the expulsion of the contaminated product.
**3.20- Flowchart of the software for excess of current consumption of the motor-** This software has the aim to control and to inform in real time in case of sudden increasing of current consumption of the motor 30 (fig. 12); this situation could be a signal of anomalies inside the refining / mixing operation. In this case the central unit 21 (fig. 14) activates the operation 126 (fig. 15), that consists in the launching of the alarm signalization, and in the reduction of the speed of the refiner / mixer, giving to the operator the possibility to decide about the stopping of the refiner / mixer.
**3.21- Flowchart of the software for the granulometric control-** This software has the aim to control the granulometry of the pasty substance at the end of the refining / mixing 74, 77 (fig. 12), in statistical and in continuous way, and to inform in real time about the anomalies, revealed by means of the in line granulometric sensors 86, 87 (fig. 13, 14); in this case the central unit 21 (fig. 14) activates the operation 127 (fig. 15), that consists in the launching of the alarm signalization, and in the reduction of the speed of the refiner / mixer, giving to the operator the possibility to decide about the stopping of the refiner / mixer.
**3.22- Refiner / mixer functioning mode -** As already said, for the use of the present innovative machine as refiner or as mixer machine, no mechanical alterations are required; and this because the functioning principles of the machine, of the central unit 21 (fig. 14), of the self-learning software 109 (fig. 16), and of the standard refining / mixing operation software 103 (fig. 15), are in both cases the same.
   In particular, the structure of the software means 109 (fig. 16), 103 (fig. 15) is the same, because the parameters to be controlled, in base of the kind of the product, are the same for the refining and for the mixing operations. As said, these parameters are:
   - the temperature of the pasty substance 74, 77 (fig. 12) at each operating stage,
   - the granulometry of said pasty substance 74, 77 (fig. 12),
   - the presence of metals inside the pasty substance 74, 77 (fig. 12),
   - the sudden increasing of current consumption of the motor 30 (fig. 12).

As said, the only difference between the software means for refining and for mixing, is in the fact that the mixing software requires low speed of the cinematic means for refining (because in this case they have only a mixing function), and high feeding speed, to favourite a perfect mixing, avoiding influences on the granulometry of the final product.

## Claims

1. Refiner / mixer (16, 121, 122) that comprises
at least a structure (24), means for the refining / mixing (18) of raw materials (56) (pre-refined, milk, sugar, etc.), that comprise at least an inner ring (39), at least an outer ring (41), with rolling parts (40) placed among the surfaces (42, 43), that perform the refining / mixing of said raw materials (56),
**characterized in that**
said refiner / mixer (16, 121, 122) comprises at least a central unit (21) with electric and electronic means, to command and control the refiner / mixer,
said structure (24) comprises at least a motor group (30) with electronic control and feedback (92), to regulate in real time the speed of refining / mixing, according to the central unit (21) data,
said refining / mixing means (18) comprise one or more refining / mixing devices (26) that comprise at least a cinematic means for refining / mixing (54) that comprises at least a flange (37) with a splined hole (38), at least an inner ring (39) blocked on said flange (37), at least an outer ring (41) blocked inside the hollow cylinder (31), with rolling parts (40) placed between the surfaces (42, 43), at least a transmission spline shaft (28, 117, 118, 119, 120, 125), to give motion to said cinematic means for refining / mixing (54),
said refining / mixing means (18) comprise one or more refining / mixing devices (26) that comprise pre-charging means (44), that are springs to permit the quick and continuous adjustments of the refining / mixing rolling parts (40), and comprise elastic sealing means (48), to protect said pre-charging means (44) and the transmission spline shaft (28, 117, 118, 119, 120, 125) from contamination from said pasty substance (74, 77) and to permit at the same time said quick and continuous adjustments of the refining / mixing rolling parts (40),
said refiner / mixer (16, 121, 122) comprises in an integrated way cooling means (19) and washing means (20) electronically controlled, that only serve said refiner / mixer (16, 121, 122), to regulate in real time the condition of refining / mixing, typical for each kind of pasty substance (74, 77), as requested by the central unit (21),
said refiner / mixer (16, 121, 122) comprises in an integrated way, electronically controlled feeding means from the top (17), and/or feeding means from the bottom (17), and/or feeding means from intermediate position (124) of said raw materials (56) (pre-refined, milk, sugar, etc.), that only serve said refiner / mixer (16, 121, 122), to permit the refining / mixing of innovative products, in which is fundamental to chose the feeding position for said raw materials (56),
said refiner / mixer (16, 121, 122) comprises one or more temperature sensors (65, 66, 79, 88, 80, 81) that are distributed along the whole production cycle, for the control in real time of the temperature in the different phases of the refining / mixing, comprises one or more in line granulometric sensors (86, 87), for the control in real time of the granulometric size of the pasty substance (74, 77), and comprises one or more in line metal-detector sensors (90, 91), for the control in real time of the presence of metals inside the pasty substance (74, 77),
said central unit (21) comprises the self-learning software (109), to facilitate the search of the optimal parameters for the refining / mixing of a new product, observing the temperature limits and the required granulometric size of the pasty substance (74, 77),
said central unit (21) comprises the refining / mixing software (103), for the refining / mixing of a known product, observing the temperature limits and the required granulometric size of the pasty substance (74, 77),
said central unit (21) comprises the refining / mixing software (103), that comprises the control of the presence of metals inside the pasty substance (74, 77), comprises the control of the electrical consumption of the motor (30), comprises the control of the granulometric size of the pasty substance (74, 77),
the basic components (123) of said refiner / mixer (16, 121, 122) are the components (21, 24, 26, 54, 27, 29, 17, 22, 124, 30 19, 20, 117, 118, 119, 120, 125) to get the configurations that fit with the requirement of the market,
in which said refiner / mixer (16, 121, 122) performs in a continued way the production of said very fresh pasty substance (74, 77) with the required granulometric size, produced at a controlled temperature during the different phases of the refining / mixing, without metal
contamination.

2. Refiner / mixer (16, 121, 122), according with claim 1, **characterized in that** each refining / mixing device (26) comprises
at least a flange (37) that the comprises
at least a cylindrical portion (45) that comprises at least a groove (46) for at least a seal OR (50),
at least a groove (47) to receive the ring (48) with precise backlash, in which the surface (51) fits with said seal OR (50), to protect said pre-charging means that are helicoidal springs (44) and the transmission spline shaft (28, 117, 118, 119, 120, 125) from contamination from said pasty substance (74, 77),
at least a groove (49) to receive a certain quantity of pre-charging means (44), according with the calculated pre-charge,
refiner / mixer (16, 121, 122), that comprises
at least a ring (48) placed among each said flange (37), ring (48) that comprises at the ends at least a groove (52) to receive the corresponding seals OR (53), ring (48) in which its length is calculated so that said seals OR (53) are compressed in a calculate way inside the corresponding grooves (52), to protect said pre-charging means (44) and the transmission spline shaft (28, 117, 118, 119, 120, 125) from contamination from said pasty substance (74, 77), and to contemporarily permit the application of the calculated pre-charge by means of said pre-charging means (44), so to contemporarily permit said quick and continuous adjustments of the refining / mixing rolling parts (40) during the refining / mixing.

3. Refiner / mixer (16, 121, 122), according with claim 1, **characterized in that**
the basic components (123) of said refiner / mixer (16, 121, 122) are the central unit (21) with the electric and electronic means, the structure (24), the refining / mixing devices (26), the cinematic means for refining / mixing (54), the upper head (27), the lower head (29), the feeding means from the top (17), from the bottom (22), from intermediate position (124) of said raw materials (56), the motor group (30), cooling means (19), washing means (20), the transmission spline shaft (28, 117, 118, 119, 120, 125).

4. Refiner / mixer (16, 121, 122), according with claim 1, **characterized in that**
each refining / mixing device (26) comprises at least a hollow cylinder (31) that comprises cooling holes (32), and that presents portions (33) that receive in a precise way the cinematic means for refining / mixing (54), hollow cylinders (31) that present portions (34) with holes (36), that permit the reciprocal connection among a certain quantity of said refining / mixing devices (26), and with the upper head (27) and the lower head (29), by means of screws (35).

5. Refiner / mixer (16, 121, 122), according with claim 1, **characterized in that**
each of said one or more refining / mixing devices (26) comprise one or more temperature sensors (88) for the control in real time of the temperature of the pasty substance (74, 77) during the refining / mixing.

6. Refiner / mixer (16, 121, 122), according with claim 1, **characterized in that**
the temperature sensors (65, 66, 79, 88, 80, 81), at least a metaldetector (90, 91), at least a granulometric sensors (86, 87), at least an electronically controlled feeding pump (57), at least an electronically controlled feeding valve (60, 61) for the raw materials (56), at least a motor (30) and the feedback (93), at least an electronic controlled valve (84, 85) for the expulsion of the pasty substance (74, 77), at least an electronically controlled valve (75, 78) for the closing of the piping of the pasty substance (74, 77), at least an electronically controlled cooling pump (63), at least an electronically controlled washing pump (72), means for data elaboration and visualization (82), are electrically and electronically connected to the central unit (21).

7. Refiner / mixer (16, 121, 122), according with claim 6, **characterized in that**
the central unit (21) comprises devices for the acquisition of the data (83) from the sensors, means for the treatment and the memorizing of the data (93), software for the treatment of the data (94), internal data-sheets (95), electronic controller (96) for the motor/s (30), electronic controller (97) for the feeding pump/s (57), electronic controller (98) for the valve/s (84, 85) for the expulsion of the pasty substance (74, 77), electronic controller (99) for the valve/s (75, 78) for the closing of the piping of the pasty substance (74, 77), electronic controller (100) for the cooling pump/s (63), electronic controller (101) for the washing pump/s (72), electronic controller (102) for the valve/s (60, 61).

8. Refiner / mixer (16, 121, 122) according with claim 1, **characterized in that**
the central unit (21) acquires and/or memorizes the data from the sensors and/or from the operator, etc., elaborates that data by means of said means (94), compares that data in an iterative way with the internal data-sheets, and sends data to the related electronic controller (96, 97, 98, 99, 100, 101, 102) of each component, according to the internal data-sheets (95), for the production of a pasty substance (74, 77) with the required granulometric size, produced at a controlled temperature during the different phases of the refining / mixing, without metal contamination.

9. Refiner / mixer (16, 121, 122), according with claim 6, **characterized in that** comprises the self-learning software (109) to facilitate the search of the optimal parameters for the refining / mixing in the shortest time of a new product, in which:
the temperature of the raw materials (56) is acquired by means of the sensors (79),
the temperature of the pasty substance (74, 77) during the refining / mixing is acquired by means of the sensors (88),
the temperature of the pasty substance (74, 77) at the end of the refining / mixing is acquired by means of the sensors (80, 81),
said temperatures are compared with the internal data-sheets (95),
the self-learning software (109), executes the operation (110), that starts the feeding pump (57), the motor (30), the cooling pump (63), to a certain % (i.e. at the 30 %) of the maximum performance,
the granulometric size measuring (111) of the pasty substance (74, 77) is performed by means of the granulometric sensors (86, 87),
if the granulometric size is higher (112) than the value in the internal data-sheets (95), i.e. 20 micron, the central unit (21) performs the operation (113) that consists in the increasing of a certain % (i.e. of the 5 %), the speed of the motor (30), to refine / mix in a more efficient way the raw material (56),
the granulometric size measuring (111) is repeated,
if the granulometric size is yet higher (112) than the value in the internal data-sheets (95), the central unit (21) performs the operation (113), that consists in the increasing of a certain % (i.e. of the 5 %), the speed of the motor (30),
this operation is repeated more times in a cycling way, till to reach the required granulometric size,
as soon as the required granulometric size is reached (114), the central unit (21) performs in a cycling way the operation (115), that consists, at each cycle, in the increasing of a certain % (i.e. of the 10 %), the speeds of the motor (30), of the feeding pump (57), and of the cooling pump (63),
then the operation (116) is performed, to control the temperature of the pasty substance (74, 77),
if the temperature is in accordance with the internal data-sheets (95), the granulometric size measuring (111) is repeated,
new cycles of increasing of a certain % (i.e. of the 10 %), the speeds of the feeding pump (57), of the motor (30), and of the cooling pump (63) are performed,
new controls of the temperature of the pasty substance (74, 77), and new granulometric size measuring (111) are performed at each cycle,
and this till to the pasty substance (74, 77) reaches the maximum temperature admitted by the internal data-sheets (95),
in which, at this point, the speeds of the feeding pump (57), of the motor (30), and of the cooling pump (63) are obtained in an iterative way, and are considered the optimal parameters to be used for the future production of this new product.

10. Refiner / mixer (16, 121, 122), according with claim 6, **characterized in that** the software (103) performs the standard refining / mixing, in which:
the temperature of the raw materials (56) is acquired by means of the sensors (79),
the temperature of the pasty substance (74, 77) during the refining / mixing is acquired by means of the sensors (88),
the temperature of the pasty substance (74, 77) at the end of the refining / mixing, is acquired by means of the sensors (80, 81),
said temperatures are compared with the internal data-sheets (95),
if said temperatures of the pasty substance (74, 77) are higher (104) than the internal data-sheets (95), then the central unit (21) performs in a cycling way the operation (107), that consists in the gradual increasing of the speed of the cooling pump (63), with the aim to decrease the temperature of the pasty substance (74, 77), in accordance with the internal data-sheets (95),
if this goal is not reached,
the central unit (21) performs in a cycling way and for a certain time, the operation (105), that consists in the lowering of the speed of the motor (30), and (106) in the lowering of the speed of the feeding pump (57), till to get accordance respect to the internal data-sheets (95),
if this goal is reached,
the refiner / mixer (16, 121, 122) continues the refining / mixing,
if this goal is not reached,
the central unit (21) performs the stop of the refiner / mixer (16, 121, 122).
